# EUROPÄISCHE PATENTANMELDUNG

(11) **EP 0 707 234 A1**
(43) Veröffentlichungstag der Anmeldung: **17.04.1996**
(21) Anmeldenummer: 95113429.5
(22) Anmeldetag: 26.08.1995
(51) Int. Cl.: G03B 42/04

(54) **Barcodesystem für fotografische Blattfilme**

(30) Priorität: 14.10.1994 DE 4436835
(71) Anmelder: Agfa-Gevaert AG, D-51373 Leverkusen (DE)
(72) Erfinder: Schneider, Rudolf, D-85276 Pfaffenhofen (DE); Lechner, Georg, D-85653 Aying (DE); Zehetmaier, Thomas, D-85646 Neufarn (DE); Reichhart, Michael, D-81739 München (DE); Feytens, Frans, B-1860 Meise (BE); Hersschens, Gilbert, B-2400 Mol (BE)

(57) **Zusammenfassung**

Die Erfindung betrifft ein Barcode-System für fotografische Blattfilme (39), bei dem ein Blattfilmstapel (4) mit einer lichtdichten Verpackung (5) in einen Vorratsbehälter (12) eingesetzt, die lichtdichte Verpackung (5) von dem Blattfilmstapel (4) abgezogen, ein filmspezifischer Barcode (7) gelesen und die Blattfilme (39) unter Verwendung der im Barcode (7) enthaltenen Daten weiterverarbeitet werden. Der Barcode (7) ist an einem blattförmigen, zumindest für eine bestimmte Lichtwellenlänge opaken Träger (6) angebracht, der zwischen Blattfilmstapel (4) und lichtdichter Verpackung (5) liegt, und der Barcode (7) ist auf derjenigen Seite des Trägers (6) angeordnet, die der Verpackung (5) zugewandt ist.

## Beschreibung

Die Erfindung betrifft ein Barcode-System nach dem Oberbegriff des Anspruchs 1.

Ein Barcode-System für fotografische Blattfilme ist z. B. aus der EP 0 500 277 A2 bekannt. Dieses Barcode-System dient dazu, in einem digitalen Bildsystem, bei dem Bilder über einen Laser-Rekorder auf fotografischen Film belichtet werden, die Belichtung und den anschließenden Entwicklungsprozeß des Films filmspezifisch zu steuern. Der Barcode befindet sich hierbei auf einem Behälter, der einen Blattfilmstapel enthält. Auf dem Barcode sind filmspezifische Daten, wie Filmempfindlichkeit, Filmformat etc. gespeichert. Beim Öffnen des Filmbehälters wird der Barcode gelesen und die Film-Verarbeitungsgeräte nach Maßgabe der Barcode-Daten gesteuert.

Nachteilig bei diesem Barcode-System ist, daß der Barcode fest mit dem Filmbehälter verbunden ist. Es eignet sich deshalb nicht für Blattfilm-Verpackungen, die vollständig vom Blattfilmstapel abgezogen werden. Bei derartigen Verpackungen würde der Barcode ebenfalls vom Blattfilmstapel abgezogen und wäre deshalb nach dem Abziehen nicht mehr lesbar. Eine derartige, vollständig abziehbare Verpackung ist zum Beispiel aus der EP 0 313 686 A1 bekannt.

Aus der US PS 5,231,656 ist bekanntgeworden, einen Barcode direkt auf Röntgenblattfilme zu belichten und bei der Verarbeitung der Blattfilme die im Barcode gespeicherten Daten zu benutzen. Nachteilig bei diesem Barcode-System ist, daß die Barcodes eine nutzbare Fläche des Films verdecken. Diese Bereiche des Films können dann nicht mehr zur Aufnahme von Bildinformation dienen.

Es ist daher Aufgabe der Erfindung, ein Barcode-System für Blattfilme zu schaffen, bei dem ein Barcode in möglichst direkter Weise dem Blattfilmstapel räumlich zugeordnet ist, wobei die o. g. Nachteile vermieden werden.

Diese Aufgabe wird durch die im kennzeichnenden Teil des Anspruchs 1 genannten Merkmale gelöst.

Durch die Erfindung wird ein Barcode-System für ein Filmverarbeitungssystem angegeben, bei dem ein Blattfilmstapel in einer lichtdichten, flexiblen Verpackung verpackt ist. Die Verpackung ist unter Tageslichtbedingungen in einem Vorratsbehälter für ein Filmverarbeitungsgerät einsetzbar. Innerhalb des Vorratsbehälters wird die lichtdichte Verpackung unter lichtdichten Bedingungen im Dunkeln von dem Blattfilmstapel vollständig abgezogen. Erfindungsgemäß ist auf einem Träger, der zumindest für eine bestimmte Lichtwellenlänge opak ist, ein Barcode angebracht. Dadurch, daß sich der Träger zwischen Blattfilmstapel und Verpackung befindet, bleibt er nach Abziehen der Verpackung unter dem Blattfilmstapel liegen und schützt den Blattfilmstapel vor Belichtung durch Licht der genannten Wellenlänge. Der Träger ist deshalb vor allem für diejenigen Wellenlängen undurchlässig, in denen das Filmmaterial lichtempfindlich reagiert. Der Barcode ist auf der Seite des Trägers angeordnet, die im verpackten Zustand der Verpackung zugewandt ist.

Die Erfindung ist in einer Reihe, in Unteransprüchen genannten Anwendungen vorteilhaft einsetzbar. Vorteilhafte Ausführungsformen der Erfindung ergeben sich ebenfalls aus verschiedenen Unteransprüchen.

Im folgenden werden Ausführungsbeispiele der Erfindung anhand mehrerer Figuren näher erläutert. Es zeigen:
- Fig. 1: einen Filmpack,
- Fig. 2: ein Blattfilm-Magazin,
- Fig. 3: einen geöffneten Filmpack,
- Fig. 4: ein Laser-Belichtungsgerät,
- Fig. 5: eine Barcode-Leseeinrichtung und
- Fig. 6: ein Röntgenkassetten-Be- bzw. Entladegerät.

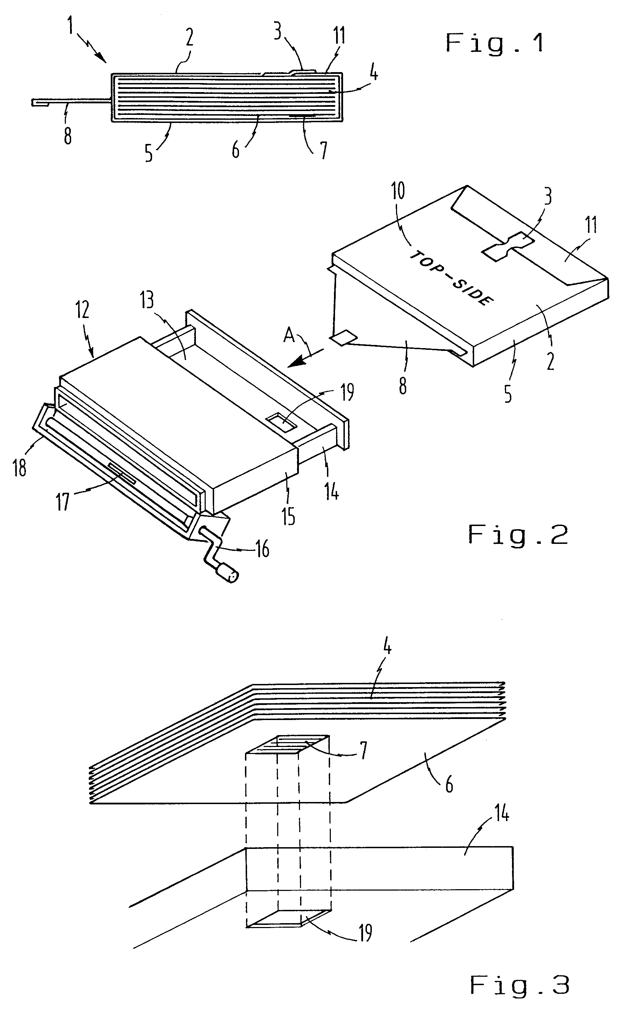

In Fig. 1 ist eine Blattfilmpackung 1 dargestellt, in der ein fotografischer Blattfilmstapel 4 liegt. Der Blattfilmstapel 4 ist in eine lichtdichte Verpackung 5 eingepackt. Sie besteht aus thermisch verschweißbarem Plastik, das zerreißfest, flexibel und elastisch ist sowie einen geringen Reibungskoeffizienten aufweist. Geeignet ist z. B. eine schwarz eingefärbte Polyäthylenfolie.

Der Blattfilmstapel 4 kann z. B. Röntgenblattfilme enthalten., Er kann aber genausogut fotografische Blattfilme enthalten, auf die CRT-Bilder ausgegeben werden oder auf die Bilder mit modulierten, abgelenkten Laserstrahlen aufgezeichnet werden.

Die Verpackung 5 hat eine nach außen weisende, lose Lasche 8. Sie dient dazu, daß die Verpackung 5 in einem entsprechenden, weiter unten beschriebenen, Tageslicht-Filmmagazin von dem Blattfilmstapel 4 abgezogen werden kann. Dazu hat die Verpackung 5 an ihrer Oberseite 2 einen Klebestreifen 3, mit dem die Verpackung 5 an einer Faltlasche 11 lichtdicht verschlossen ist. Zieht man an der Lasche 8, so löst sich die Faltlasche 11 von dem Klebestreifen 3 und die Verpackung 5 ist vom Blattfilmstapel 4 abziehbar.

An der Unterseite des Blattfilmstapels 4 liegt ein lichtdichter, blattförmiger Träger 6. Er besteht aus Karton, kann jedoch auch aus einem beliebigen anderen Material (z. B. Kunststoff) bestehen, das zumindest für eine bestimmte Lichtwellenlänge undurchlässig ist. Der lichtdichte Karton 6 liegt in der Blattfilmpackung 1 zwischen dem Blattfilmstapel 4 und der Verpackung 5. Auf der Kartonseite, die der Verpackung 5 zugewandt ist, ist ein Barcode 7 an dem Karton 6 aufgebracht. Der Barcode 7 befindet sich auf einer vorgegebenen Position des Kartons. Er kann auf den Karton 6 aufgedruckt sein oder auf einem Aufkleber gedruckt sein, welcher auf den Karton 6 geklebt ist.

In Fig. 2 ist dargestellt, wie die Blattfilmpackung 1 in einem Vorratsbehälter 12 eingesetzt wird. Die Oberseite 2 der Blattfilmpackung 1 trägt als Kennzeichnung eine Markierung 10 "top side". Der Vorratsbehälter 12 ist hier ein transportables Filmmagazin. Er kann aber genausogut fest in ein Filmverarbeitungsgerät eingebaut sein.

Das Filmmagazin 12 hat ein Deckelteil 15, in dem ein Bodenteil 14 schubladenartig ein- und ausziehbar ist. Die Schublade 14 ist ver- und entriegelbar. Zum Einsetzen der Blattfilmpackung 1 in das Filmmagazin 12 wird die Schublade 14 geöffnet. Alternativ dazu kann jedoch auch ein Klappdeckel am Deckelteil 15 vorgesehen sein, durch den die Blattfilmpackung 1 in das Filmmagazin 12 eingesetzt wird. Die Schublade 14 hat eine Vertiefung 13, in die Blattfilmpackung 1 in Einführrichtung A eingesetzt wird. Die Lasche 8 der Blattfilmpackung 1 liegt dabei in Einführrichtung A vorne, so daß sie nach Einsetzen der Blattfilmpackung 1 am anderen Ende der Schublade 14 liegt. Dort hat das Filmmagazin 12 ein abklappbares Aufwickelteil 18, an dem eine Aufwickelwelle 17 befestigt ist. An der Aufwickelspule 17 wird die Lasche 8 angebracht. Die Anbringung kann z. B. durch einen Klettverschluß oder durch mechanisches Klemmen der Lasche 8 an die Aufwickelwelle 17 erfolgen. Dann wird das Aufwickelteil 18 zugeklappt, so daß Filmmagazin 12 in diesem Bereich innen lichtdicht abgeschlossen ist. Die Schublade 14 ist dabei ebenfalls geschlossen. Anschließend wird die Kurbel 16 gedreht, wobei sich Lasche 8 um die Aufwickelwelle 17 legt, Faltung 11 vom Klebestreifen 3 löst und nach und nach die Verpackung 5 ebenfalls um die Aufwickelwelle 17 wickelt. Dadurch wird die Verpackung 5 vom Blattfilmstapel 4 abgezogen.

Die Schublade 14 des Filmmagazins 12 weist an ihrer Unterseite 19 eine Ausnehmung 19 auf. Diese fensterartige Ausnehmung 19 liegt genau in dem Bereich, in dem der Barcode 7 im Filmmagazin 12 zu liegen kommt. Bei abgezogener Verpackung 5 liegt der Blattfilmstapel 4 im Filmmagazin 12 mit dem Karton 6 im vertieften Schubladenboden 13.

Fig. 3 zeigt, wie der Barcode 7 auf dem Karton 6 relativ zum Blattfilmstapel 4, zur Schublade 14 und zum Schubladenfenster 19 liegt.

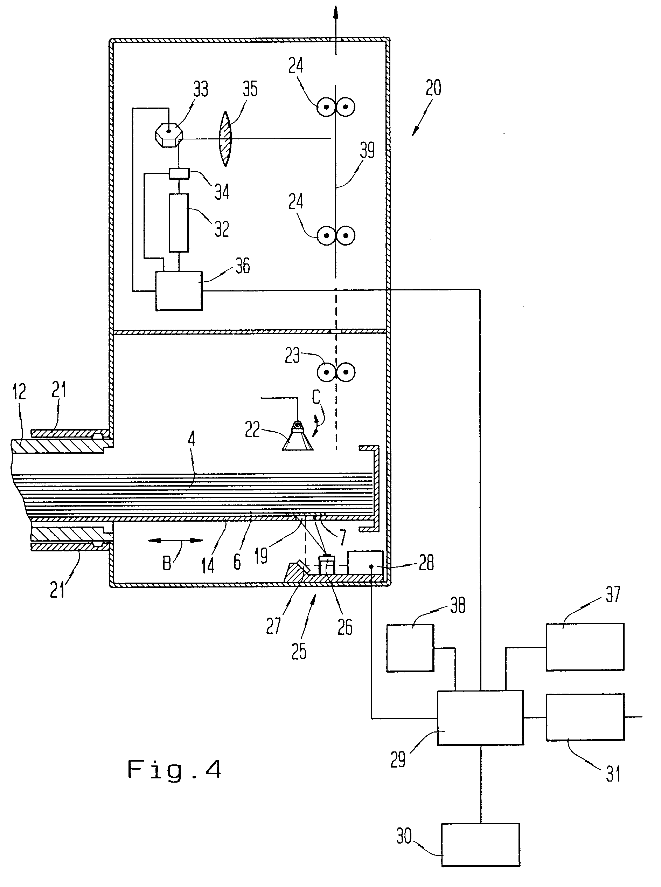

In Fig. 4 ist ein Laserstrahlen-Aufzeichnungsgerät 20 dargestellt, in das das oben beschriebene Filmmagazin 12 eingesetzt ist. Das Filmmagazin 12 ist bei diesem Ausführungsbeispiel in eine Magazinaufnahme 21 eingeschoben. Dort ist das Magazin 12 zu verriegeln bzw. zu entriegeln. Das Magazin 12 kann aber genausogut fest, d. h. nicht lösbar mit dem Laserbelichter 20 verbunden sein. Wichtig ist, daß die Verbindung lichtdicht ist, d. h., daß bei geöffneter Magazinschublade 14 kein Licht auf die geöffnete Magazinschublade 14, bzw. auf den Blattfilmstapel 4 fallen kann. Die Magazinschublade 14 ist in Richtungen B zu öffnen bzw. zu schließen. Bei geöffneter Magazinschublade 14 kann der oberste Film des Blattfilmstapels 4 von einer Saugereinrichtung 22 vom Blattfilmstapel 4 abgenommen werden. Dazu saugt die Saugeinrichtung 22 das oberste Filmblatt an, verschwenkt sich in Richtung C und führt den angesaugten Blattfilm einen Transportwalzenpaar 23 zu.

Unterhalb des Filmmagazins 12 bzw. unterhalb der geöffneten Magazinschublade 14 befindet sich ein Barcode-Leser 25. Dieser besteht aus einer Belichtungseinheit 26, hier eine Leuchtdiodenzeile 26 mit einer Wellenlänge von 660 nm sowie aus einem Umlenkspiegel 27 und einer Auswerteeinheit 28. In der Auswerteeinheit 28 befinden sich in an sich bekannter Weise optische Elemente, ein lichtempfindlicher Empfänger und eine elektronische Auswerteschaltung. Der Barcode-Leser 25 ist so angeordnet, daß sein wirksamer Lesebereich genau in das Schubladenfenster 19 fällt, wenn die Magazinschublade 14 in einer bestimmten, geöffneten Position ist. Der Barcode-Leser kann dann den auf dem Karton 6 befindlichen Barcode 7 lesen. Weil der Karton 6 das Licht der Leuchtdiode 26 abschirmt, kann es nicht auf den Blattfilmstapel 4 treffen.

Auf dem Barcode 7 sind filmspezifische Daten gespeichert. Diese Daten können z. B. den Filmhersteller, das Filmformat, die Filmempfindlichkeit, das Herstellungsdatum der Filme, Namen des Filmtyps, Haltbarkeitsdatum des Filmtyps und andere herstellungsspezifische Daten umfassen. Diese vom Barcode-Leser 25 gelesenen Daten können dann an eine zentrale Steuereinheit 29 übermittelt werden, von der aus andere Geräte gesteuert werden, in denen der Blattfilm weiterverarbeitet wird, z. B. die Belichtungssteuereinheit 36 des Laserbelichters 20, ein fotografisches Filmentwicklungsgerät 30, eine Röntgenröhre, mit der der Blattfilm bestrahlt wird, etc. Des weiteren ist es möglich, beim Einlegen eines neuen Blattfilmstapels zu prüfen, ob der alte Träger des Barcodes aus dem Filmmagazin entfernt wurde. Ergibt der Vergleich, daß sich z. B. die Emulsionsnummer oder das Herstellungsdatum des Barcodes nach dem Beladen des Filmmagazins nicht geändert haben, so kann eine Fehlermeldung "alten Karton aus dem Filmmagazin entnehmen" ausgegeben werden.

Im Ausführungsbeispiel der Fig. 4 werden die Filme in einem Laserbelichter 20 belichtet. Von einem Bildspeicher 31 werden Bildinformationen an die Belichtungssteuereinheit 36 übermittelt. Diese steuert einen akustooptischen Modulator 34, einen Laser 32 (Helium-Neon-Laser oder Laserdiode) sowie eine bewegliche Spiegel-Ablenkeinheit 33, in diesem Fall einen rotierenden Polygonspiegel. Es kann jedoch genausogut eine Schwingspiegelanordnung verwendet werden. Die entsprechend den Bildinformationen modulierten Laserstrahlen werden über ein fθ-Objektiv 35 auf den zu belichtenden Blattfilm 39 gerichtet. Mit der Spiegeleinheit 33 wird der Laserstrahl in eine Zeilenrichtung abgelenkt (fast scan). Senkrecht dazu wird in eine Spaltenrichtung der Blattfilm 39 von einem Antrieb 24 langsam bewegt (slow scan). Der belichtete Film wird dann einem fotografischen Entwicklungsprozeß unterzogen. Die Belichtungssteuerung des Laserbelichters 20 erfolgt mit einer Look-up-Tabelle (LUT) 37. Zur Belichtungssteuerung wird jeweils eine dem gewählten Filmtyp entsprechende LUT ausgewählt. Dabei kann den verschiedenen, im Barcode gespeicherten Datenarten jeweils eine LUT entsprechen. Gegebenenfalls können einzelne LUT-Werte jedoch auch in Abhängigkeit vom gelesenen Barcode-Datensatz von der Steuereinheit 29 umgerechnet werden und die Belichtung entsprechend dem ungerechneten Werten gesteuert werden. Über eine mit der zentralen Gerätesteuerung 29 verbundenen Eingabekonsole 37 lassen sich darüber hinaus auch manuelle Korrekturen der Belichtungssteuerung vornehmen.

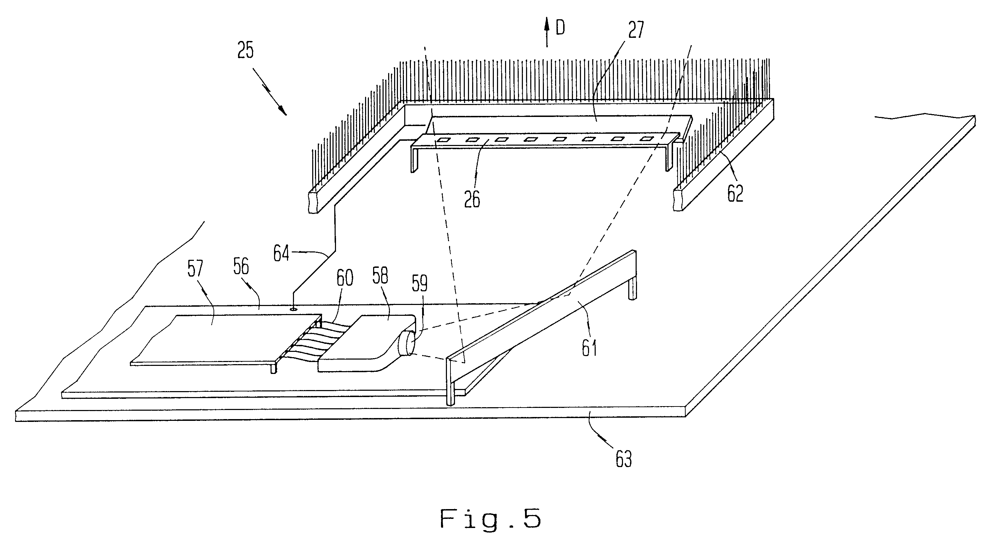

In Fig. 5 ist der Barcode-Leser 25 näher gezeigt. Er befindet sich auf einer Grundplatte 63. Die Leuchtdiodenzeile 26 ist so angeordnet, daß sie in Richtung D nach oben abstrahlt, so daß ein über der Zeile angeordneter Barcode beleuchtet wird. Hinter der LED-Zeile 26 befindet sich ein erster Spiegel 27, der um etwa 45° zur Ebene der Grundplatte 63 geneigt ist. Ein zweiter, auf der Grundplatte 63 montierter Spiegel 61 ist so angeordnet, daß das Bildfeld eines Objektivs 59 über die beiden Spiegel 27, 61 genau in die Ebene des Barcodes reicht. Der gefaltete optische Strahlengang zwischen Barcode und Objektiv 59 ist ca. 87 mm lang. Der optische Empfänger 58 ist mit Leitungen 60 an eine elektronische Schaltung 57 angeschlossen, die automatisch verschiedene Barcode-Arten erkennt und auswertet. Die elektrische Versorgung der Leuchtdiodenzeile 26 erfolgt über eine Leitung 64 von einer Grundplatine 56 aus. Zur Abschirmung der Umgebung vor dem Licht der Leuchtdiode 26 dient eine schwarze Nylon-Bürste 62. Die Nylonborsten der Bürste 62 sind flexibel. Sie können sich um das Fenster 19 eines Filmmagazins 12 lichtdicht anlegen.

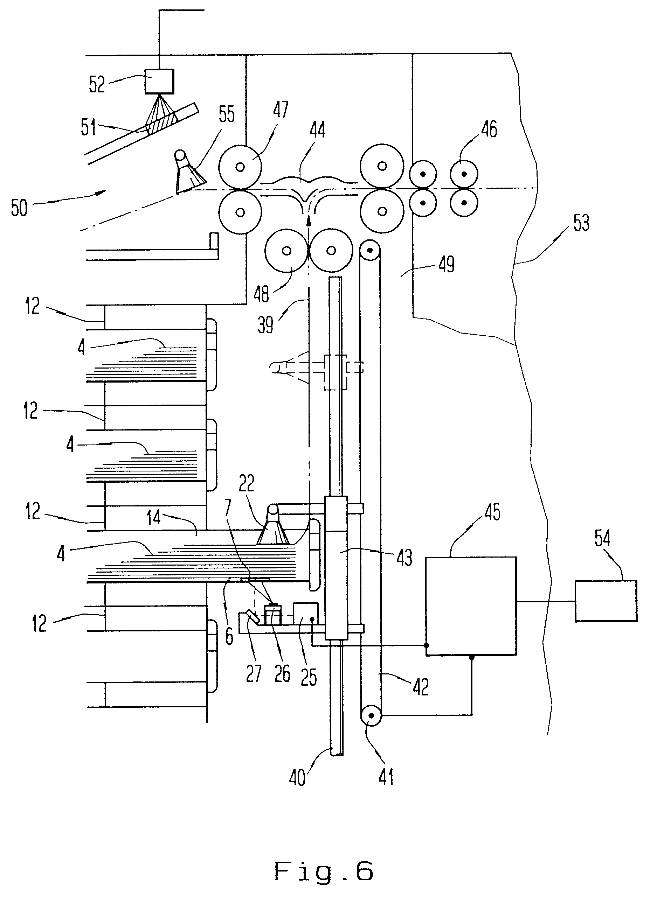

In Fig. 6 ist der Einsatz des oben beschriebenen Barcode-Systems in einem Be- und Entladegerät 50 für Röntgenkassetten gezeigt. Derartige Geräte sind z. B. von der Anmelderin unter den Namen Curix Capacity Plus auf den Markt gebracht worden. Ein zu ent- bzw. beladende Röntgenkassette 50 wird dabei in einen lichtdichten Bereich des Gerätes 53 eingebracht. Die Kassette 50 wird dort geöffnet, ein zu entladendes Röntgenfilmblatt mit einer Saugereinrichtung 55 aus der Röntgenkassette entnommen und mit Transportwalzen 46, 47 der weiteren Bearbeitung zugeführt. Die weitere Bearbeitung des Röntgenblattfilms, z. B. die fotografische Entwicklung, kann dabei durch Daten gesteuert werden, welche auf der Röntgenkassette 50 in einem Halbleiterspeicher 51 gespeichert sind. Eine Lese-/Schreibeinrichtung 52 liest die gespeicherten Daten und gibt sie an eine zentrale Steuereinheit 45 weiter.

Zum Beladen einer Röntgenkassette 50 stehen verschiedene Blattfilmstapel 4 in verschiedenen Filmmagazinen 12 zur Verfügung. Jedes Magazin enthält eine bestimmte Filmsorte, d. h. Filme eines bestimmten Formats, einer bestimmten Empfindlichkeit oder dergleichen. Je nach zu beladender Kassette 50 wird von der Steuereinrichtung 45 eine über eine Führungsstange 40, einen Antrieb 41 und einen Seilzug 42 verschiebbare Filmentnahmeeinrichtung 22 zu einem bestimmten Filmmagazin 12 bewegt. Anschließend wird das Filmmagazin 12 geöffnet, ein Röntgenblattfilm entnommen und entlang eines Transportschachtes 49 zu den Kassettenbelademitteln 47, 48 transportiert. Im Transportschacht 49 herrschen lichtdichte Bedingungen. Mit der Entnahmeeinrichtung 22 ist auf einer gemeinsamen Führungsplatte 43 der Barcode-Leser 25 verbunden. Im geöffneten Zustand des Filmmagazins 12 befindet sich der Barcode-Leser 25 unterhalb des Filmmagazins 12 und die Saugereinrichtung 22 oberhalb des Filmmagazins. Wie bereits bei Fig. 4 beschrieben, liest der Barcode-Leser 25 den auf dem Karton 6 befindlichen Barcode 7 durch ein im Filmmagazin 12 bzw. in der Schublade 14 befindliches Fenster. Die gelesenen Barcode-Daten werden an die zentrale Steuereinheit 45 übermittelt. Anschließend wird das oberste Filmblatt des Blattfilmstapels 4 von der Saugereinrichtung 22 abgenommen und der Blattfllm 39 einem Transportwalzenpaar 48 zugeführt. Von diesem gelangt der Blattfilm 39 über eine Filmweiche 44 in die zu beladende Röntgenkassette 50. Die gelesenen Barcode-Daten können von der zentralen Steuereinheit 45 über die Lese-/Schreibeinheit 52 in den Halbleiterspeicher 51 geschrieben werden. Gleichzeitig können diese Daten an ein Röntgenaufnahmegerät 54 übermittelt werden und mit den Daten Röntgenaufnahmeparameter, wie Dosisleistung, Strahlungsart, etc. in optimaler Anpassung an das verwendete Filmmaterial gesteuert werden.

Die Erfindung wurde anhand einiger Ausführungsbeispiele beschrieben. Es ist jedoch für den Fachmann auf fotografischem Gebiet klar, daß es hierzu vielerlei Abwandlungsmöglichkeiten gibt. Beispielsweise ist es möglich, die in einem Halbleiterspeicher der Kassette gespeicherten Daten gleichzeitig auf den Film wiederum als Barcode zu belichten, soweit dies wünschenswert ist.

## Patentansprüche

1. Barcode-System für fotografische Blattfilme (39) bei dem ein Blattfilmstapel (4) mit einer lichtdichten Verpackung (5) in einen Vorratsbehälter (12) eingesetzt, die lichtdichte Verpackung (5) von dem Blattfilmstapel (4) abgezogen, ein filmspezifischer Barcode (7) gelesen und die Blattfilme (39) unter Verwendung der im Barcode (7) enthaltenen Daten weiterverarbeitet werden, dadurch gekennzeichnet, daß der Barcode (7) an einem blattförmigen, zumindest für eine bestimmte Lichtwellenlänge opaken Träger (6) angebracht ist, der zwischen Blattfilmstapel (4) und lichtdichter Verpackung (5) liegt, und daß der Barcode (7) auf derjenigen Seite des Trägers (6) angeordnet ist, die der Verpackung (5) zugewandt ist.

2. Barcode-System nach Anspruch 1, dadurch gekennzeichnet, daß die Blattfilme (39) in einem Filmverarbeitungsgerät (20, 53) von einer Saugereinrichtung (22) aus dem Vorratsbehälter (12) einzeln entnommen werden, wobei die Saugereinrichtung (22) jeweils den obersten Blattfilm vom Blattfilmstapel (4) abnimmt.

3. Barcode-System nach Anspruch 1 oder 2, dadurch gekennzeichnet, daß der Vorratsbehälter (12) ein Bodenteil (14) und ein Deckelteil (15) aufweist und daß das eine Teil (14, 15) innerhalb des anderen Teiles (15, 14) schubladenartig ein- und ausziehbar ist.

4. Barcode-System nach einem der vorhergehenden Ansprüche, dadurch gekennzeichnet, daß der Vorratsbehälter (12) in seinem Bodenteil (14) eine Ausnehmung (19) aufweist und daß der auf dem Träger (6) befindliche Barcode (7) nach dem Abziehen der Verpackung (5) im Bereich der Ausnehmung (19) auf dem Bodenteil (14) liegt.

5. Barcode-System nach einem der Ansprüche 3 bis 4, dadurch gekennzeichnet, daß in dem Filmverarbeitungsgerät (20, 53) unterhalb des Bodenteils (14) des Filmmagazins (12) oder des Bereichs, in dem das Bodenteil (14) ein- bzw. ausziehbar ist, eine Barcode-Leseeinheit (25) angeordnet ist und daß die Barcode-Leseeinheit (25) mit einer Geräte-Steuereinheit (29) verbunden ist.

6. Barcode-System nach einem der vorhergehenden Ansprüche, dadurch gekennzeichnet, daß der Vorratsbehälter (12) als Wechselmagazin ausgebildet ist, das in das Blattfilm-Verarbeitungsgerät (20, 53) einschiebbar und aus diesem vollständig herausziehbar ist.

7. Barcode-System nach Anspruch 6, dadurch gekennzeichnet, daß das Blattfilm-Verarbeitungsgerät (20, 53) ein Belichtungsgerät, insbesondere mit einem als Belichtungsquelle dienenden Laser (32) ist und daß die vom Barcode-Leser (25) gelesenen Daten zum Steuern des Belichtungsvorgangs verwendet werden.

8. Barcode-System nach Anspruch 6, dadurch gekennzeichnet, daß das Blattflm-Verarbeitungsgerät (20, 53) ein Beladegerät für Röntgenkassette (50) ist, bei dem ein aus dem Vorratsbehälter (12) entnommener Blattfilm (39) in eine Röntgenkassette (50) eingebracht wird und daß die vom Barcode-Leser (25) gelesenen Daten zum Steuern eines Röntgenaufnahmegerätes (54) und/oder zum Steuern eines fotografischen Entwicklungsgerätes (30) des Blattfilms (39) verwendet werden.

9. Barcode-System nach einem der vorhergehenden Ansprüche, dadurch gekennzeichnet, daß der Träger (6) ein Karton ist.

10. Barcode-System nach einem der vorhergehenden Ansprüche, dadurch gekennzeichnet, daß die Verpackung (5) eine Markierung (10) aufweist, die eine Oberseite oder eine Unterseite des verpackten Blattfilmstapels (4) kennzeichnet.

11. Barcode-System nach Anspruch 2, wobei eine Vielzahl von Filmmagazinen (12) vorgesehen ist, die mit einer einzigen, zwischen den Filmmagazinen (12) hin- und herbewegbaren Saugereinrichtung (22) entladbar sind, dadurch gekennzeichnet, daß mit der bewegbaren Saugereinrichtung (22) eine Barcode-Leseeinheit (25) fest verbunden ist.
